(19) Europäisches Patentamt
European Patent Office
Office européen des brevets

(11) **EP 4 068 759 B1**

(12) **EUROPEAN PATENT SPECIFICATION**

(45) Date of publication and mention of the grant of the patent:
**04.12.2024 Bulletin 2024/49**

(21) Application number: **21166769.6**

(22) Date of filing: **01.04.2021**

(51) International Patent Classification (IPC):
**H04N 5/33** (2023.01)       **H04N 25/63** (2023.01)
**H04N 25/671** (2023.01)

(52) Cooperative Patent Classification (CPC):
**H04N 25/63; H04N 25/671**

(54) **METHODS FOR DARK SIGNAL NON-UNIFORMITY CORRECTION**

VERFAHREN ZUR UNGLEICHFÖRMIIGKEITSKORREKTUR VON DUNKELSIGNALEN

PROCÉDÉ DE CORRECTION DE NON-UNIFORMITÉ DE SIGNAL SOMBRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022 Bulletin 2022/40**

(73) Proprietor: **Xenics N.V.**
**3001 Leuven (BE)**

(72) Inventors:
• **DEROO, Pieter**
**3020 Herent (BE)**
• **GIELIS, Guy**
**3001 Heverlee (BE)**

(74) Representative: **IPLodge bv**
**Technologielaan 9**
**3001 Heverlee (BE)**

(56) References cited:
**US-A1- 2004 051 797**

• **DAS J ET AL: "Smart onboard image enhancement algorithms for SWIR day and night vision camera", PROCEEDINGS OF SPIE, IEEE, US, vol. 9451, 26 May 2015 (2015-05-26), pages 945103 - 945103, XP060054968, ISBN: 978-1-62841-730-2, DOI: 10.1117/12.2177318**
• **GRZEGORZ BIESZCZAD ET AL: "Method of detectors offset correction in thermovision camera with uncooled microbolometric focal plane array", PROCEEDINGS OF SPIE, vol. 7481, 17 September 2009 (2009-09-17), US, pages 74810O, XP055402295, ISBN: 978-1-5106-1533-5, DOI: 10.1117/12.830678**

EP 4 068 759 B1

## Description

### Field of the invention

The present invention is directed to a method for determining a dark signal for each pixel of an image sensor.
Furthermore, the present invention is directed to a method for determining a relative dark signal for each pixel of an image sensor.
Furthermore, the present invention is directed to a method for correcting raw image data of an image sensor for dark signal non-uniformity.
Further, the present invention is directed to an image sensor comprising a controller, wherein the controller is configured to perform at least one of the above methods.

### Background

Digital cameras record information via an image sensor placed at the focal plane of the camera's optics to measure the light gathered during an exposure. When the image sensor detects a photon, photoelectrons are released within the pixels of the image sensor. The number of photoelectrons is measured at the end of exposure and a digital number - the analog-to-digital unit (ADU) is produced. In this disclosure, the term "light" is used for radiation both in the visual as well as in the infrared part of the electromagnetic spectrum.
Undesired variation in the signal of the image sensor, which is used for creating the image, is referred to as noise. Noise can be produced by the image sensor itself or by surrounding electronics and is a characteristic of the observed radiation. When the response of a pixel of the image sensor fluctuates over time, the noise is referred to as temporal noise. Furthermore, when different pixels of the image sensor have different responses, the noise is referred to as spatial noise, which is also called fixed pattern noise (FPN).
Dark current is caused by thermally generated electrons which cause a response even when the image sensor is not exposed to light. The longer the integration time, the larger the generated dark signal. As this behavior can differ between pixels of the image sensor, it strongly contributes to the fixed pattern noise of the sensor. Even though dark current is common across all image sensor types, some image sensor types are more impacted by dark current than others.
Semi-conductor photo sensitive material used for infrared imaging, as for instance InGaAs, typically has a lower bandgap than sensors designed for visible light. This results in a higher dark current. Therefore, cameras having an InGaAs image sensor generally need to be cooled in order to increase signal to noise ratio and to reduce dark signal and dark signal non-uniformity.
For some applications, for instance for very precise light measurement, very deep cooling is applied to maximally remove the dark current. Common techniques for deep cooling are cryogenic cooling with liquid nitrogen or helium or Stirling coolers.
For less critical applications, in which some level of dark noise is tolerable, the image sensor is kept at a low temperature using a thermoelectric cooling element (TEC) in combination with a controller in order to keep the temperature stable.
Both approaches are cumbersome and introduce significant costs and complexity to the system. In extreme cases the cooling system is much larger and heavier than the image sensor itself. Even for less demanding applications the TEC needs to be integrated into the camera which increases the size and weight of the camera. Furthermore, the cooling system and/or TEC consumes power, which further impedes the use of image sensors in some applications, e.g. when space and/or weight are critical. Besides, measures need to be taken to avoid condensation when operating the cooling system or TEC respectively. US 2004/051797 A1 discloses a method for noise removal in a digital image captured by an image sensor. The method removes dark fixed pattern noise and pixel response non-uniformity which vary as a function of imager temperature and imager integration time.
J. Dasa, K. Vanhoof a, G. Gielisa, B, Gouverneura, K. Woutersa, P.Derooa, R. Vandersmissenb, J. Vermeiren, P. Merkena: "Smart onboard image enhancement algorithms for SWIR day and night vision camera", PROCEEDINGS OF SPIE, IEEE, vol. 9451, 26 May 2015 (2015-05-26) discloses short wave infrared imaging based on InGaAs image sensor wherein "TrueNUC" algorithm is utilised for non-uniformity correction.

### Summary

It is an object of the present invention to provide means for compensating dark signal and/or dark signal non-uniformity. It is especially an object of the present invention to provide means for reducing dark signal and/or dark signal non-uniformity from the image sensor response in order to dispense with cooling systems and/or TECs for image sensors.
The invention is defined by the independent claims.

Advantageous embodiments are given in the dependent claims, in the further description as well as in the figures, wherein the described embodiments can, alone or in any combination of the respective embodiments, provide a feature of the present invention unless not clearly excluded.

Described is a method for determining a dark signal for each pixel of an image sensor, wherein the image sensor comprises multiple pixels, comprising the steps of

- providing a dark pixel response for different image sensor temperatures and for different integration times for each pixel of the image sensor,
- determining coefficients of a model for the dark signal for each pixel based on the provided dark pixel response,
- determining the dark signal for each pixel for a given integration time and a given image sensor temperature based on the model for the dark signal,

   wherein the dark signal of the model is dependent on integration time and on image sensor temperature,
   wherein the dark signal of the model has a linear dependency on integration time,
   and wherein a gain and an offset of the linear dependency are dependent on image sensor temperature.

Such a method provides significant advantages over the use of cooling systems and/or TECs for reducing the effect of dark noise, since it removes the need to include cooling systems and/or TECs all together. With the above method the dark signal of each pixel of the image sensor can be determined on the basis of the given image sensor temperature and the given integration time, whereas the given image sensor temperature and the given integration time, can be freely selected - for example according to a need of a user. The model for the dark signal predicts the dark signal for each pixel of the image sensor accurately. Thus, the method enables to correct a signal of the image sensor captured for the given integration time and at the given image sensor temperature for the influence of dark noise. Therefore, when using the above method in a camera comprising the image sensor, no TEC and/or cooling system needs to be included in order to deal with dark noise effect. Thus, the camera has a significantly lower power consumption, a decreased size and/or weight and a lower complexity and cost.

The image sensor is a sensor that detects and conveys information used to make an image. Preferably, the image sensor is configured to measure the light gathered during an exposure. In other words, the image sensor is preferably configured to measure the light gathered during integration time, i.e. the length of time that the image sensor collects light. The image sensor comprises multiple pixels. The pixels of the image sensor can be arranged linearly - in this case the image sensor is a one-dimensional image sensor, also called line sensor. Alternatively, the pixels of the image sensor are arranged in a two-dimensional array. Such a two-dimensional image sensor is also called area sensor.

Preferably the image sensor is a short-wave infrared sensor (SWIR sensor). Further preferably the image sensor is an InGaAs sensor. More preferably, the short-wave infrared sensor and/or InGaAs sensor is configured to measure light in the SWIR region, preferably light having a wavelength between 0,7 and 2,5 $\mu$m.

When the image sensor detects a photon, photoelectrons are released within the pixels of the image sensor. Preferably the image sensor is configured to detect the number of photoelectrons at the end of exposure for each pixel. Preferably the image sensor is configured to convert the number of photoelectrons for each pixel to a digital number for each pixel by an analog-to-digital converter (ADC). An output of the ADC, i.e. the digital number it produces, is called the analog-to-digital unit (ADU).

In principle the method comprises three steps. In a first step, the dark pixel response for different image sensor temperatures and for different integration times for each pixel of the image sensor is provided. The dark pixel response is the output of the ADC, when the image sensor is not exposed to light. In other words, the dark pixel response is a measure for the behavior of the pixels of the image sensor in the dark, especially a measure for the thermally created electrons during integration time. Preferably, the first step comprises providing an average dark pixel response and a standard deviation of the dark pixel response for every pixel at each image sensor temperature and for each integration time. This can be achieved by providing multiple dark pixel responses at each image sensor temperature and for each integration time and determining an average and standard deviation of the multiple dark pixel responses provided for the same image sensor temperature and for the same integration time.

The image sensor temperature is the temperature of the image sensor during integration time. The image sensor temperature may not be equal to an external temperature of an environment in which the image sensor or a camera comprising the image sensor is placed. The image sensor temperature may be influenced by the heat generated by the readout integrated circuit of the image sensor and by the heat generated by other parts of the camera.

After the first step, the dark pixel response of every pixel for different image sensor temperatures and for different integration times is known. Preferably after the first step, the average dark pixel response and the standard deviation of every pixel for different image sensor temperatures and for different integration times is known. In general, it is possible to provide the dark pixel response and/or the average dark pixel response for a lot of different image sensor temperatures and for a lot of different integration times. For example, it is possible to provide the dark pixel response for 9 different sensor temperatures and for 36 different integration times. However, in such a case a lot, i.e. 324 of dark pixels responses for each pixel need to be provided. Preferably, the dark pixel response and/or the average dark pixel response for each pixel is provided for 3 to 5, more preferably for 3 or 4 different image senor temperatures and for 2 to 5, more preferably for 2 to 4 different integration times. Thus, preferably 6 to 25, more preferably 6 to 16 dark pixel responses and/or average dark pixel responses are provided for each pixel.

Furthermore, the dark pixel response and/or average dark pixel response for each pixel is preferably provided for image sensor temperatures and/or integration times that are adjusted to a future use of the image sensor. In other words, the different image sensor temperatures for which the dark pixel response and/or the average dark pixel response is provided preferably correspond to an expected range of future image sensor temperatures. Further preferably the different integration times for which the dark pixel response and/or the average dark pixel response is provided preferably correspond to an expected range of future integration times. For example, if an expected range of image sensor temperatures is 8 °C to 60 °C and an expected range of integration times is 500 μs to 4000 μs, then the dark pixel response and/or average dark pixel response is provided for different sensor temperatures and integration times laying in these ranges, for example [8 °C, 500 μs; 8 °C, 4000 μs; 34 °C, 500 μs; 34 °C, 4000 μs; 47 °C, 500 μs; 47 °C, 4000 μs; 60 °C, 500 μs; 60 °C, 4000 μs].

With regard to proving the dark pixel response and according to a preferred embodiment of the invention, the step of providing the dark pixel response for different image sensor temperatures and for different integration times for each pixel of the image sensor comprises

-    providing several dark images by capturing images in the dark with the image sensor at different image sensor temperatures and for different integration times.

Preferably, when capturing images in the dark, the image sensor is protected from light by putting a cover in front of the pixels of the image sensor. Further preferred, when capturing images in the dark, the image sensor is placed in a climate chamber having a constant temperature. Preferably, by choosing the temperature of the climate chamber, the image sensor temperature of the image sensor can be defined. It may be possible that one dark image is captured at each image sensor temperature and for each integration time. However, preferably multiple dark images are captured at each image sensor temperature and for each integration time and the multiple dark images are averaged. More preferably, the average dark pixel response and the standard deviation of the dark pixel response is determined for every pixel at each image sensor temperature and for each integration time.

In a second step of the method the coefficients of the model for the dark signal for each pixel based on the provided dark pixel response are determined. Preferably, in the second step of the method the coefficients of the model for the dark signal for each pixel based on the provided average dark pixel response and standard deviation are determined. In other words, this step corresponds to a calibration step of the model. The model for the dark signal for each pixel predicts the value of the dark signal of each pixel individually dependent on the image sensor temperature and the integration time. The dark signal of the model has a linear dependency on integration time. Expressed in a mathematical formula, the dark signal $D_{i,j}$ of the model for pixel at array position $i,j$ is supposed to have the following form:

$$D_{i,j}(T_{FPA}, t_{int}) = m_{i,j}(T_{FPA})t_{int} + b_{i,j}(T_{FPA})$$

wherein $T_{FPA}$ is the image sensor temperature and $t_{int}$ is the integration time. $m_{i,j}$ is the gain or slope of the linear dependency, while $b_{i,j}$ denotes the offset of the linear dependency. The gain $m_{i,j}$ and the offset $b_{i,j}$ of the linear dependency are not constant, but dependent on image sensor temperature $T_{FPA}$. In other words, the model predicts the absolute dark signal of each pixel as a function of the image sensor temperature and the integration time. The model has the advantage that it is robust to changes of the image sensor temperature and easy to implement.

With regard to the dependency of the model for the dark signal with respect to the image sensor temperature and according to a preferred embodiment of the invention the gain of the linear dependency has an exponential dependency on image sensor temperature and the offset of the linear dependency has a polynomial dependency on image sensor temperature. Expressed in mathematical formulas, the gain $m_{i,j}(T_{FPA})$ and the offset $b_{i,j}(T_{FPA})$ are supposed to have the following form, wherein $n$ denotes the model order, and $\vartheta_i$ and $\theta_i$ denote the coefficients of the model:

$$m_{i,j}(\theta_i, T_{FPA}) = 2^{\theta_0 + \theta_1 \cdot T_{FPA} + \cdots + \theta_n \cdot T_{FPA}^n}$$

$$b_{i,j}(\vartheta_i, T_{FPA}) = \vartheta_0 + \vartheta_1 \cdot T_{FPA} + \cdots + \vartheta_n \cdot T_{FPA}^m$$

With regard to the model order and according to a preferred embodiment of the invention the order of the exponential dependency of the gain on image sensor temperature is $n = 2$ or $3$ and/or the order of the polynomial dependency of the offset on image sensor temperature is $m = 2$ or $3$. The order of the exponential dependency $n$ of the gain on image sensor temperature may be different to the order of the polynomial dependency $m$ of the offset on image sensor temperature. Alternatively and preferably, the order of the exponential dependency $n$ of the gain on image sensor temperature and the order of the polynomial dependency $m$ of the offset on image sensor temperature are the same. In the remainder of this disclosure, $n = m$ will be assumed to be the model order and will be noted as $n$. However, the skilled person will understand that a choice $n \neq m$ is possible and that such a choice may require an adaptation of some of the equations that will be presented. Using models of order $n = 2$ or $3$ has shown to give accurate results for the dark signal predicted with the model. Furthermore, in order to determine the coefficients of the model of order $n$, dark pixel responses at max $n + 1$ different image sensor temperatures for every different integration time and/or average dark pixel responses at max $n + 1$ different image sensor temperatures for every different integration time for each pixel have to be provided. For example, dark pixel responses need to be collected at a minimum of 2 different integration times to determine the linear dependency of the dark pixel response on the integration time. For a model of order $n = 2$, dark pixel responses need to be collected at a minimum of 3 different image sensor temperatures per integration time. Thus, for the implementation of a model of order $n = 2$, at least 6 different dark pixel responses per pixel need to be recorded. Thus, having a model of order $n = 2$ or $3$, keeps the effort for providing the dark pixel response and/or the average dark pixel response low. More preferably, the order of the exponential dependency of the gain and the order of the polynomial dependency of the offset are the same.

With respect to the coefficients and according to a preferred embodiment of the invention, the coefficients of the model for the dark signal comprise a first set of coefficients and a second set of coefficients and wherein the step of determining the coefficients of the model for the dark signal for each pixel based on the provided pixel response comprises

-   determining the gain and offset of the linear dependency by fitting a straight line to the dark pixel response as function of integration time for each image sensor temperature of the dark pixel response,
-   determining the first set of coefficients by fitting a function of image sensor temperature to the determined gains, and
-   determining the second set of coefficients by fitting a function of image sensor temperature to the determined offsets.

In other words, when determining the first set of coefficients, which are the coefficients $\theta_i$ of the exponential dependency of the gain $m_{i,j}(\theta_i, T_{FPA})$ on image sensor temperature and the second set of coefficients, which are the coefficients $\vartheta_i$ of the polynomial dependency of the offset $b_{i,j}(\vartheta_i, T_{FPA})$ on image sensor temperature, the provided dark pixel response for each pixel is used to determine the gain and offset of the linear dependency. Preferably, the provided standard deviation for each dark pixel response is taken into account for determining the gain and offset of the linear dependency.

Preferably, a straight line is fitted to the dark pixel response as function of integration time for each image sensor temperature of the dark pixel response. By these means, the gain estimate $\widehat{m}_{i,j} \in \mathbb{R}^{N \times 1}$ and the offset estimate $\widehat{b}_{i,j} \in \mathbb{R}^{N \times 1}$ of the linear dependency of the dark pixel response on the integration time are determined, wherein $N$ denotes the number of constant image sensor temperatures for which the dark pixel response has been recorded. For example, in case the dark pixel response for each pixel is provided for 3 different integration times and for 4 different image sensor temperatures - i.e. in total 12 dark pixel responses for each pixel - the gain and offset of the linear dependency of the dark signal of each pixel is determined by fitting a straight line to each set of three dark pixel responses having the same image sensor temperature, but different integration times. Thus, for each pixel, a 4 by 1 vector for the gain estimate $\widehat{m}_{i,j}$ and a 4 by 1 vector for the offset estimate $\widehat{b}_{i,j}$ of the linear dependency are determined.

In order to determine the first set of coefficients $\theta_i$ for each pixel at array position $i,j$ a function of image sensor temperature is fitted to the determined gains. Preferably, the step of determining the first set of coefficients by fitting a function of image sensor temperature to the determined gains is a weighted linear regression. For the above example, this preferably means that the function of image sensor temperature is fitted to all determined gain values, i.e. the four gain estimates $\widehat{m}_{i,j}$ per pixel times the number of pixels of the image sensor. Preferably, a function of $T_{FPA} \in \mathbb{R}^{N \times 1}$, with $N$ being the number of different image sensor temperatures for which the dark pixel response and/or the average dark pixel response is provided, is fitted to the gain estimate $\widehat{m}_{i,j} \in \mathbb{R}^{N \times 1}$ by estimating the coefficients $\widehat{\theta}_{i,j} \in \mathbb{R}^{(n+1) \times 1}$, with n being the model order, as follows:

$$\hat{\theta}_{i,j} = \left( \left( W_{i,j} X \right)^T \left( W_{i,j} X \right) \right)^{-1} \left( W_{i,j} X \right)^T W_{i,j} log_2 \left( \widehat{m}_{i,j} \right)$$

where $X \in \mathbb{R}^{Nx(n+1)}$ denotes a design matrix containing the values of the image sensor temperature for which the dark pixel response is provided. In other words, the design matrix contains data on the independent variable $T_{FPA}$. The matrix $W_{i,j} \in \mathbb{R}^{NxN}$ is a diagonal *NxN* weighting matrix for the pixel at array position *i,j* with elements on the diagonal position preferably formed as:

$$W_{i,j}(k,k) = \frac{\sqrt{\widehat{m}_{i,j}(k)}}{\sigma_{i,j}(k)}$$

with $\sigma_{i,j}(k)$ being the standard deviation of the corresponding average dark pixel response, that is preferably provided in the first step of the method. For the above example, this means that the four different gain estimates $\hat{m}_{ij}$ of the linear dependency are incorporated in the four diagonal elements of the weighting matrix $W_{ij}$ and in the logarithmic term. Thus, for a model of order *n*, *n* + 1 coefficients, i.e. the first sets of estimated coefficients $\hat{\theta}_0$ to $\hat{\theta}_n$ for all pixels *i,j* are determined. Alternatively to the above definition of the elements on the diagonal of the weighting matrix $W_{ij}$, other choices for *k* dependent $W_{i,j}(k, k)$ are allowed, as well as the case in which all diagonal elements equal 1.

In order to determine the second set of coefficients $\vartheta_i$ for each pixel at array position *i,j* a function of image sensor temperature is fitted to the determined offsets. Preferably, the step of determining the second set of coefficients by fitting a function of image sensor temperature to the determined offsets is an ordinary linear regression. For the above example this means, that the function of image sensor temperature is fitted to the four offset estimates $\hat{b}_{i,j}$ of the linear dependency of all pixels of the image sensor. Preferably, a function of $T_{FPA} \in \mathbb{R}^{Nx1}$, with *N* being the number of different image sensor temperatures for which the dark pixel response is provided, is fitted to the estimated offset $\hat{b}_{i,j}$ by estimating the coefficients $\hat{\vartheta}_{i,j} \in \mathbb{R}^{(n+1)x1}$, with n being the model order, as follows:

$$\hat{\vartheta}_{i,j} = (X^T X)^{-1} X^T \hat{b}_{i,j}$$

Thus, for a model of order *n*, *n* + 1 coefficients, i.e. the second sets of estimated coefficients $\hat{\vartheta}_0$ to $\hat{\vartheta}_n$ for all pixels *i,j* are determined.

In other words, after the second step of the method, i.e determining estimates for the coefficients of the model for the dark signal for each pixel based on the provided dark pixel response, the estimated coefficients, preferably the first set of estimated coefficients and the second set of estimated coefficients, are known. Thus, the model is calibrated and can be used to determine the dark signal of each pixel of the sensor.

In the last step of the method, i.e determining the dark signal for each pixel for a given integration time and a given image sensor temperature based on the model for the dark signal, the model is used to determine the dark signal for each pixel of the image sensor. In other words the estimated coefficients of the model determined in the previous step are used and the output of the model, i.e. the estimated dark signal $\hat{D}_{i,j}$ for pixel at array position *i,j* is determined. The given integration time and the given image sensor temperature can be freely selected, for example according to a need of the user. The estimated dark signal is then determined as:

$$\widehat{D}_{i,j}(T_{FPA}, t_{int}) = m_{i,j}(\hat{\theta}_{i,j}, T_{FPA})t_{int} + b_{i,j}(\hat{\vartheta}_{i,j}, T_{FPA})$$

As already mentioned, it is also an object of the present invention to provide a method for determining the relative dark signal for each pixel of an image sensor.

According to the above, described is a method for determining a relative dark signal for each pixel of an image sensor, wherein the image sensor comprises multiple pixels, comprising the steps of

- providing a photo-response non-uniformity (PRNU) correction factor for each pixel of the image sensor,
- providing a dark pixel response for different image sensor temperatures and for different integration times for each pixel of the image sensor,

- providing a relative dark pixel response for each pixel based on the PRNU correction factor of each pixel and the dark pixel response of each pixel,
- determining coefficients of a model for the relative dark signal for each pixel based on the provided relative dark pixel response,
- determining the relative dark signal for each pixel for a given integration time and a given image sensor temperature based on the model of the relative dark signal,

wherein the relative dark signal of the model is dependent on integration time and on image sensor temperature, wherein the relative dark signal of the model has a linear dependency on integration time, and wherein a gain and an offset of the linear dependency are dependent on the image sensor temperature.

The method for determining the relative dark signal for each pixel of the image sensor provides significant advantages over the use of cooling systems and/or TECs for reducing the effect of dark noise, since it removes the need to include cooling systems and/or TECs all together. With the above method the relative dark signal of each pixel of the image sensor can be determined on the basis of the given image sensor temperature and the given integration time, whereas the given image sensor temperature and the given integration time, can be freely selected, for example according to a need of the user. The model for the relative dark signal predicts the relative dark signal for each pixel of the image sensor accurately. Thus, the method enables to correct a signal of the image sensor captured for the given integration time and at the given image sensor temperature for the influence of dark noise. Therefore, when using the above method in a camera comprising the image sensor, no TEC and/or cooling system needs to be included in order to deal with dark noise effect. Thus, the camera has a significant lower power consumption and a decreased size.

Compared to the method for determining the dark signal for each pixel of the image sensor, which models the absolute value of the dark signal for every pixel, the method for determining the relative dark signal for each pixel of the image sensor models the relative dark signal of each pixel with regard to an ensemble result of the dark signal of all pixels of the image sensor. Compared to the method for determining the dark signal, the method for determining the relative dark signal for each pixel of the image sensor has the advantage that for an accurate result of the model the dark pixel response for fewer different image sensor temperatures needs to be provided in order to determine the coefficients of the model. Moreover, the relative model for the gain factor obeys a simpler polynomial fit instead of an exponential behaviour. This is easier to implement and less sensitive to fitting variations. However, since the method for determining the dark signal models the absolute value of the dark signal for every pixel, it allows to fully exploit the dynamical range of the image sensor.

In principle the method for determining the relative dark signal for each pixel of the image sensor comprises five steps. In a first step the PRNU correction factor for each pixel of the image sensor is provided. PRNU - photo response non-uniformity - is a measure of the spatial noise of the image sensor. Ideally, when a fixed, uniform amount of light falls on the image sensor, each pixel of the sensor should output exactly the same amount of signal. However, due to a variety of factors including small variations in pixel size, readout integrated circuit design, and substrate material this ideal behavior is not achieved in a real image sensor. Instead, when a uniform light irradiates the image senor, the pixels output slightly different signal strengths. This difference in response to a changing uniform light source is referred to as photo response non-uniformity (PRNU). Preferably, the PRNU correction factor of a pixel at location $i,j$ is the ratio of an average pixel response of all pixels of the image sensor to the pixel response of the pixel at location $ij$.

According to the invention, the step of providing the PRNU correction factor for each pixel of the image sensor comprises

- providing one or more light images by capturing one or more images of a uniform light source with the image sensor,
- providing one or more dark images by capturing one or more images in the dark with the image sensor, or by capturing one or more images of a uniform light source at a different light level than the light images,
- determining a difference image from the one or more light images and the one or more dark images or from the one or more light images and the one or more images at a different light level than the light images, and
- determining the PRNU correction factor for each pixel of the image sensor from the difference image.

In other words, the difference image is used to determine the PRNU correction factor for each pixel. Preferably, the PRNU correction factor $\alpha_{ij}$ for pixel at array position $i,j$ is determined by:

$$\alpha_{ij} = \frac{\overline{\Lambda}}{\Delta_{i,i}}$$

with $\overline{\Delta}$ being an average over all the pixels in the difference image and $\Delta_{i,j}$ being the pixel at array position *i,j* of the difference image.

Preferably, the provided light images and the provided dark images are images captured using the same integration time and the same image sensor temperature. Further preferably, capturing one or more images of a uniform light source with the image sensor comprises capturing one or more images of a uniform light source in a climate chamber at room temperature. Further preferably, capturing one or more images in the dark with the image sensor comprises capturing one or more images in the dark in the climate chamber at an external temperature that yields the same image senor temperature as capturing the one or more images of the uniform light source at room temperature.

Preferably, providing one or more light images comprises capturing multiple images of the uniform light source with the image sensor and providing an average light image. Further preferably, providing one or more dark images comprises capturing multiple images in the dark with the image sensor and providing an average dark image. More preferably, the average light image and the average dark image are used to determine the difference image by subtracting the average dark image from the average light image.

In a second step of the method for determining the relative dark signal the dark pixel response for different image sensor temperatures and for different integration times for each pixel of the image sensor is provided. Preferably, an average dark pixel response and a standard deviation for different image sensor temperatures and for different integration times for each pixel of the image sensor is provided. This step corresponds to the first step of the method for determining the dark signal. With regard to technical features of the step for providing the dark pixel response and/or the average dark pixel response for different image sensor temperatures and for different integration times for each pixel of the image sensor, it is referred to the description of the method for determining the dark signal.

In a third step of the method the relative dark pixel response for each pixel based on the PRNU correction factor of each pixel and the dark pixel response of each pixel is provided. The relative dark pixel response for each pixel includes the ensemble result of all pixels of the image sensor.

In this regard and according to the invention, the step of providing the relative dark pixe response for each pixel based on the PRNU correction factor of each pixel and the dark pixel response of each pixel, comprises

- Providing a PRNU corrected dark pixel response by considering the PRNU correction factor of each pixel for the corresponding pixel of the dark pixel response, and
- providing the relative dark pixel response for each pixel by correcting the PRNU corrected dark pixel response with an average PRNU corrected dark pixel response, wherein the average PRNU corrected dark pixel response is an average over all pixels of the PRNU corrected dark pixel response.

Expressed in mathematical formulas, the relative dark pixel response $S_{i,j}(T_{FPA}, t_{int})$ is preferably determined according to:

$$S_{i,j}(T_{FPA}, t_{int}) = \alpha_{ij} D_{i,j}(T_{FPA}, t_{int}) - \varepsilon\left(\alpha_{ij} D_{i,j}(T_{FPA}, t_{int})\right)$$

wherein $\alpha_{ij}$ denotes the PRNU correction factor of pixel *i,j*, $D_{i,j}(T_{FPA}, t_{int})$ denotes the dark pixel response of pixel *i,j,* and $\varepsilon(\alpha_{ij}D_{i,j}(T_{FPA}, t_{int}))$ denotes the average PRNU corrected dark pixel response. Thus, the method for determining the relative dark signal focuses on a pixel's deviation from the expected dark pixel response and includes the PRNU correction factor of each pixel.

In a fourth step of the method the coefficients of the model for the relative dark signal for each pixel based on the provided relative dark pixel response are determined. The relative dark signal of the model is dependent on integration time and on image sensor temperature, wherein the relative dark signal of the model has a linear dependency on integration time, and wherein a gain and an offset of the linear dependency are dependent on the image sensor temperature. Compared to the method for determining the dark signal, the model of the method for determining the relative dark signal has the same underlying structure, wherein the relative dark signal of the model is linearly dependent on integration time. Expressed in a mathematical formula, the relative dark signal $S_{i,j}$ of the model for pixel at array position *i,j* has the following form:

$$S_{i,j}(T_{FPA}, t_{int}) = n_{i,j}(T_{FPA}) \cdot t_{int} + f_{i,j}(T_{FPA})$$

wherein $T_{FPA}$ is the image sensor temperature and $t_{int}$ is the integration time. $n_{i,j}$ is the gain or slope of the linear dependency, while $f_{i,j}$ denotes the offset of the linear dependency. The gain $n_{i,j}$ and the offset $f_{i,j}$ of the linear dependency are not constant, but dependent on image sensor temperature $T_{FPA}$. In other words, the model predicts the relative dark signal of each pixel as a function of image sensor temperature and integration time. The model has the advantage that it is robust to changes of the image sensor temperature and easy to implement.

Regarding the dependency of the model for the relative dark signal with respect to the image sensor temperature and according to a preferred embodiment of the invention the gain of the linear dependency has a polynomial dependency on image sensor temperature and the offset of the linear dependency has a polynomial dependency on image sensor temperature. Expressed in mathematical formulas, the gain $n_{i,j}(T_{FPA})$ and the offset $f_{i,j}(T_{FPA})$ are supposed to have the following form, wherein $n$ denotes the model order, and $\varphi_i$ and $\phi_i$ denote the coefficients of the model:

$$n_{i,j}(\varphi_i, T_{FPA}) = \varphi_0 + \varphi_1 \cdot T_{FPA} + \cdots + \varphi_n \cdot T_{FPA}^n$$

$$f_{i,j}(\phi_i, T_{FPA}) = \phi_0 + \phi_1 \cdot T_{FPA} + \cdots + \phi_n \cdot T_{FPA}^m$$

The order of the polynomial dependency $n$ of the gain on image sensor temperature may be different to the order of the polynomial dependency $m$ of the offset on image sensor temperature. Alternatively and preferably, the order of the polynomial dependency $n$ of the gain on image sensor temperature and the order of the polynomial dependency $m$ of the offset on image sensor temperature are the same. In the remainder of this disclosure, $n$ = m will be assumed to be the model order and will be noted as $n$. However, the skilled person will understand that a choice $n \neq m$ is possible and that such a choice may require an adaptation of some of the equations that will be presented. With regard to the model order and according to a preferred embodiment of the invention the order of the polynomial dependency of the gain and/or offset on image sensor temperature is $n$ = 1 or 2. Using models of order $n$ = 1 or 2 has shown to give accurate results for the relative dark signal predicted with the model. Furthermore, in order to determine the coefficients of the model $n$ + 1 dark pixel responses at different image sensor temperatures and for different integration times and/or average dark pixel responses at different image sensor temperatures and for different integration times for each pixel have to be provided. Thus, having a model of order $n$ = 1 or 2, keeps the effort for providing the dark pixel response and/or the average dark pixel response low. More preferably, the order of the polynomial dependency of the gain and/or the order of the polynomial dependency of the offset are $n$ = 2. Further preferably, the order of the polynomial dependency of the gain and the order of the polynomial dependency of the offset on image sensor temperature are $n$ = 2.

Compared to the method for determining the dark signal for each pixel of the image sensor, which models the absolute value of the dark signal for every pixel, the model for the relative dark signal is simpler, since in the model for the relative dark signal the gain of the linear dependency has a polynomial dependency on image sensor temperature and not an exponential dependency as in the method for determining the dark signal. Thus, for the method for determining the relative dark signal, it is less complex to determine the coefficients of the model.

With respect to the coefficients and according to the invention the coefficients of the model for the relative dark signal comprise a first set of coefficients and a second set of coefficients and wherein the step of determining the coefficients of the model for the relative dark signal for each pixel based on the provided relative dark pixel response comprises

- determining the gain and offset of the linear dependency by fitting a straight line to the relative dark pixel response as function of integration time for each image sensor temperature of the relative dark pixel response,
- determining the first set of coefficients by fitting a function of image sensor temperature to the determined gains, and
- determining the second set of coefficients by fitting a function of image sensor temperature to the determined offsets.

The steps for determining the coefficients for the model for the relative dark signal are comparable to the steps for determining the coefficients for the model for the dark signal, however, not the dark pixel response is used as starting point for the fitting, but the relative dark pixel response.

In other words, when determining the first set of coefficients, which are the coefficients $\varphi_i$ of the polynomial dependency of the gain $n_{i,j}(\varphi_i, T_{FPA})$ on image sensor temperature and the second set of coefficients, which are the coefficients $\phi_i$ of the polynomial dependency of the offset $f_{i,j}(\phi_i, T_{FPA})$ on image sensor temperature, the provided relative dark pixel response for each pixel is used to determine the gain and offset of the linear dependency.

Preferably, a straight line is fitted to the relative dark pixel response as function of integration time for each image sensor temperature of the relative dark pixel response. In other words, this means that the gain and the offset of the linear dependency of the relative dark pixel response on the integration time is determined for each set of constant image sensor temperatures. By these means, the gain estimate $\hat{n}_{i,j} \in \mathbb{R}^{Nx1}$ and the offset estimate $\hat{f}_{i,j} \in \mathbb{R}^{Nx1}$ of the linear dependency of the relative dark pixel response on the integration time are determined, wherein $N$ denotes the number of constant image sensor temperatures for which the relative dark pixel response has been recorded. For example, in case the dark pixel response for each pixel is provided for 3 different integration times and for 3 different image sensor temperatures - i.e. in total 9 dark pixel responses for each pixel and thus also 9 relative dark pixel responses for each pixel - the gain estimate $\hat{n}_{i,j}$ and offset estimate $\hat{f}_{i,j}$ of the linear dependency of the relative dark signal of each pixel are determined by fitting a straight line to each set of three relative dark pixel responses having the same image sensor temperature, but different integration times. Thus, for each pixel, a 3 by 1 vector for the gain estimate $\hat{n}_{i,j}$ and a 3 by 1 vector for the offset estimate $\hat{f}_{i,j}$ of the linear dependency are determined.

In order to determine the first set of coefficients $\varphi_i$ for each pixel at array position $i,j$ a function of image sensor temperature is fitted to the determined gains. Preferably, the step of determining the first set of coefficients by fitting a function of image sensor temperature to the determined gains is an ordinary linear regression. For the above example, this preferably means that the function of image sensor temperature is fitted to all determined gain values, i.e. the three gain estimates $\hat{n}_{i,j}$ per pixel times the number of pixels of the image sensor. Preferably, a function of $T_{FPA} \in \mathbb{R}^{Nx1}$, with $N$ being the number of different image sensor temperatures for which the relative dark pixel response is provided, is fitted to the gain estimate $\hat{n}_{i,j}$ by estimating the coefficients $\hat{\varphi}_{i,j} \in \mathbb{R}^{(n+1)x1}$, with $n$ being the model order, as follows:

$$\hat{\varphi}_{i,j} = (X^T X)^{-1} X^T \hat{n}_{i,j}$$

Where $X \in \mathbb{R}^{Nx(n+1)}$ denotes a design matrix containing the values of the image sensor temperature for which the dark pixel response is provided. In other words, the design matrix contains data on the independent variable $T_{FPA}$. Thus, for a model of order $n$, $n + 1$ coefficients, i.e. the first sets of estimated coefficients $\hat{\varphi}_0$ to $\hat{\varphi}_n$ for all pixels $i,j$ are determined.

In order to determine the second set of coefficients $\phi_i$ for each pixel at array position $i,j$ a function of image sensor temperature is fitted to the determined offsets. Preferably, the step of determining the second set of coefficients by fitting a function of image sensor temperature to the determined offsets is an ordinary linear regression. For the above example this means, that the function of image sensor temperature is fitted to the three offset estimates $\hat{f}_{i,j}$ of all pixels of the image sensor. Preferably, a function of $T_{FPA} \in \mathbb{R}^{Nx1}$, with $N$ being the number of different image sensor temperatures for which the relative dark pixel response is provided, is fitted to the offset estimate $\hat{f}_{i,j}$ by estimating the coefficients $\hat{\phi}_{i,j} \in \mathbb{R}^{(n+1)x1}$, with $n$ being the model order, as follows:

$$\hat{\phi}_{i,j} = (X^T X)^{-1} X^T \hat{f}_{i,j}$$

Thus, for a model of order $n$, $n + 1$ coefficients, i.e. the second set of estimated coefficients $\hat{\phi}_0$ to $\hat{\phi}_n$ for all pixels $i,j$ are determined.

In other words, after the second step of the method, i.e. determining the coefficients of the model for the relative dark signal for each pixel based on the provided relative dark pixel response, the coefficients, preferably the first set of coefficients and the second set of coefficients, are known. Thus, the model is calibrated and can be used to determine the relative dark signal of each pixel of the sensor.

In the last step of the method, i.e. determining the relative dark signal for each pixel for a given integration time and a given image sensor temperature based on the model for the relative dark signal, the model is used to determine the relative dark signal for each pixel of the image sensor. In other words the estimated coefficients of the model determined in the previous step are used and the output of the model, i.e. the estimated relative dark current $\hat{S}_{i,j}$ for pixel at array position $i,j$ is determined. The given integration time and the given image sensor temperature can be freely selected, for example according to a need of the user. The estimated dark current is then determined as:

$$\hat{S}_{i,j}(T_{FPA}, t_{int}) = n_{i,j}(\hat{\varphi}_{i,j}, T_{FPA}) t_{int} + f_{i,j}(\hat{\phi}_{i,j}, T_{FPA})$$

As already mentioned, both methods i.e. the method for determining the dark signal of each pixel and the method for determining the relative dark signal of each pixel, can be used in order to compensate dark noise effects in an image, particularly to correct the image for dark signal non-uniformity. In this context it is also an object of the present invention to provide a method for correcting raw image data of an image sensor for dark signal non-uniformity, wherein the image sensor comprises multiple pixels, comprising the steps:

- providing a PRNU correction factor for each pixel of the image sensor,
- providing raw image data of the image sensor by capturing an image with the sensor for a given integration time, wherein the raw image data comprises a raw value for each pixel of the image sensor,
- determine the image sensor temperature at which the image is captured, and
- a) correcting the raw image data by

    - providing PRNU corrected image data comprising a PRNU corrected value for each pixel of the image sensor by considering the PRNU correction factor of each pixel for the corresponding raw value,
    - correcting the PRNU corrected image data by subtracting the relative dark signal of each pixel from the corresponding PRNU corrected value, wherein the relative dark signal is determined according the method for determining the relative dark signal for the given integration time and the determined image sensor temperature,

    and/or
- b) correcting the raw image data by

    - providing dark signal corrected image data comprising a dark signal corrected value for each pixel of the image sensor by subtracting the dark signal of each pixel from the corresponding raw value, wherein the dark signal is determined according to the method for determining the dark signal for the given integration time and the determined image sensor temperature, and
    - providing PRNU corrected image data by considering the PRNU correction factor of each pixel for the corresponding dark signal corrected value of the dark signal corrected image data.

Dark signal non-uniformity (DSNU) is a measure for the non-uniform response of a non-illuminated image sensor. In particular DSNU is the offset from the average over all pixels of the image sensor at a particular setting (image sensor temperature and integration time) but no external illumination. The method for correcting raw image data of an image sensor for dark signal non-uniformity basically comprises four steps. In the first step of the method for correcting raw image data of the image sensor for dark signal non-uniformity the PRNU correction factor for each pixel of the image sensor is provided. This step corresponds to the step of providing the PRNU correction factor for each pixel of the image sensor of the method for determining the relative dark signal. With regard to technical features of the step for providing the PRNU correction factor for each pixel of the image sensor, it is referred to the description of the method for determining the relative dark signal.

In the second step of the method for correcting raw image data of the image sensor, the raw image data of the image sensor is provided by capturing an image with the sensor for a given integration time, wherein the raw image data comprises a raw value for each pixel of the image sensor. Preferably, the given integration time can be selected freely for example according to a need of a user. The raw image data comprises the raw value for each pixel of the image sensor. Preferably, the raw value of each pixel is the ADD of each pixel.

In a third step of the method the image sensor temperature, at which the image is captured, is determined. Preferably this comprises measuring the image senor temperature while capturing the image and/or measuring an external temperature while capturing an image and converting the external temperature to the image sensor temperature.

The last step of the method is the actual correction step. Correcting the raw image data can be achieved in two ways, referred to as a) and b), depending on whether the method for determining the relative dark signal or the method for determining the dark signal is used.

In a first alternative a) the method for determining the relative dark signal is use. In this alternative the PRNU correction factor of each pixel is considered for the raw value of the corresponding pixel, thus providing the PRNU corrected image data comprising the PRNU corrected value for each pixel of the image sensor. Subsequently, the PRNU corrected image data is corrected by subtracting the estimated relative dark signal of each pixel from the corresponding PRNU corrected value, wherein the estimated relative dark signal is determined according to the method for determining the relative dark signal for the given integration time and the determined image sensor temperature. Expressed in a mathematical formula the corrected image data $C_{i,j}$ for a pixel at array position $i,j$ is given by:

$$C_{i,j}(T_{FPA}, t_{int}) = \alpha_{ij} R_{i,j}(T_{FPA}, t_{int}) - \hat{S}_{i,j}(T_{FPA}, t_{int})$$

wherein $R_{i,j}$ denotes the raw pixel response, $\alpha_{ij}$ denotes the PRNU correction factor, and $\hat{S}_{i,j}$ denotes the relative dark signal - all expressions given for a pixel at array position $i,j$. Thus, the model for the relative dark signal makes an easy correction of raw image data possible. The steps for correcting the raw image data are computationally simple and can be easily implemented into hardware.

In a second alternative b) the method for determining the dark signal is use. In this alternative the dark signal corrected image data comprising the dark signal corrected value for each pixel of the image sensor is provided by subtracting the estimated dark signal of each pixel from the corresponding raw pixel response, wherein the estimated dark signal is determined according to the method for determining the dark signal for the given integration time and the determined image sensor temperature. Subsequently, the PRNU corrected image data is provided by considering the PRNU correction factor of each pixel for the corresponding dark signal corrected value of the dark signal corrected image data. Expressed in a mathematical formula the corrected image data $C_{i,j}$ for pixel at array position $i,j$ is given by:

$$C_{i,j}(T_{FPA}, t_{int}) = \alpha_{ij}\left(R_{i,j}(T_{FPA}, t_{int}) - \widehat{D}_{i,j}(T_{FPA}, t_{int})\right)$$

wherein $R_{i,j}$ denotes the raw pixel response, $\alpha_{ij}$ denotes the PRNU correction factor, and $\widehat{D}_{i,j}$ denotes the estimated dark signal - all expressions given for a pixel at array position $i,j$. Thus, the model for the dark signal makes a correction of raw image data possible. Compared to the model for the relative dark signal the expression is less simple, however still easy to implement.

With regard to the second alternative b) and according to a preferred embodiment of the invention, the step b) correcting the raw image data further comprises the optional step

- correcting the PRNU corrected image data with an average dark signal, wherein the average dark signal is an average over all pixels of the dark signal determined according to the method for determining the dark signal for the given integration time and the determined image sensor temperature.

Optionally and preferably, the PRNU corrected image data can further be corrected, by considering the average dark signal. In other words, the corrected image data is provided by correcting the PRNU corrected image data with the average estimated dark signal, wherein the average estimated dark signal is an average over all pixels of the estimated dark signals determined according to the method for determining the dark signal for the given integration time and the determined image sensor temperature. If this optional step is carried out, the corrected image data $C_{i,j}$ for pixel at array position $i,j$ is given by:

$$C_{i,j}(T_{FPA}, t_{int}) = \alpha_{ij}\left(R_{i,j}(T_{FPA}, t_{int}) - \widehat{D}_{i,j}(T_{FPA}, t_{int})\right) + \varepsilon\left(\alpha_{ij}\widehat{D}_{i,j}(T_{FPA}, t_{int})\right)$$

wherein $\varepsilon(\alpha_{ij}\widehat{D}_{i,j}(T_{FPA}, t_{int}))$ denotes the average over all pixels of the estimated dark signal.

As already mentioned, it is also an object of the present invention to provide an image sensor comprising a controller, wherein the controller is configured to perform the method for determining a dark signal, the method for determining a relative dark signal, and/or the method for correcting raw image data of the image sensor for dark signal non-uniformity. Such an image sensor makes it possible to dispense with cooling of the image sensor. Therefore, a camera comprising such an image sensor does not need to have a cooler and/or a TEC and thus such a camera has a lower power consumption, a lower size and/or can be produced with lower costs.

Preferably, the controller of the image sensor has access to the PRNU correction factor of each pixel of the image sensor, and to the coefficients of the model of the dark signal for each pixel of the image senor and/or to the coefficients of the model of the relative dark signal for each pixel of the image senor. Further preferably, the controller has access to the raw image data of an image captured with the image sensor with a certain image sensor temperature, to the integration time used for capturing the image and to the certain image sensor temperature of the image sensor.

According to another preferred embodiment of the invention, the image sensor is a short-wave infrared sensor for a short-wave infrared camera and/or an InGaAs sensor. Preferably the short-wave infrared sensor (SWIR sensor) and/or the short-wave infrared camera are configured to measure light in the SWIR region, preferably light having a wavelength between 0,7 μm and 2,5 μm.

With regard to further advantages and technical features of the image sensor, it is referred to the method for determining the dark signal for each pixel of the image sensor, the method for determining the relative dark signal for each pixel of the image sensor, the method for correcting raw image data of the image sensor for dark signal non-uniformity, the figures and the further description.

To summarize the above, the present invention solves an important object how to provide an image sensor, wherein the image sensor does not need to be cooled in order to deal with dark noise effects. Thus, costs, power consumption, size and/or weight are significantly improved with respect to prior art image sensors that need to be cooled.

## Brief description of the drawings

These and other aspects of the invention will be apparent from and elucidated with reference to the embodiments described hereinafter. Individual features disclosed in the embodiments can constitute alone or in combination with each other an aspect of the present invention. Features of the different embodiments can be carried over from one embodiment to another embodiment.

In the drawings:

Fig. 1      shows a schematic view of an image sensor according to a preferred embodiment of the invention,

Fig. 2      shows a flow diagram of the steps of a method for determining a dark signal for each pixel of the image sensor, according to a preferred embodiment of the invention,

Fig. 3      shows a flow diagram of the steps of a method for determining a relative dark signal for each pixel of the image sensor, according to a preferred embodiment of the invention,

Fig. 4      shows a dark pixel response of a pixel of the image senor of figure 1,

Fig. 5      shows a curve progression of the dark pixel response of figure 4 along integration time for different image sensor temperatures,

Fig. 6      shows a gain of a straight line modeling the progression of the dark pixel response along integration time of figure 5 as function of image sensor temperatures,

Fig. 7      shows an offset of a straight line modeling the progression of the dark pixel response along integration time of figure 5 as function of image sensor temperatures,

Fig. 8 to 13      each shows a comparison of the value determined by the method for determining the dark signal for each pixel of the image sensor and the curve progression of figure 5, the estimated gain of figure 6 and the estimated offset of figure 7 for different model orders,

Fig. 14 to 19      each shows a comparison of a value determined by the method for determining the relative dark signal for each pixel of the image sensor and a curve progression of the relative dark pixel response of the pixel of the image sensor of figure 1 along integration time for different image sensor temperatures, an estimated gain of a straight line modeling the progression and an estimated offset of a straight line modeling the progression, for different model orders,

Fig. 20 to 28      show raw images and corrected images of the image sensor of figure 1, and

Fig. 29      shows a flow diagram of the steps of a method for correcting raw image data of the image sensor of figure 1 for dark signal non-uniformity, according to a preferred embodiment of the invention.

## Detailed description

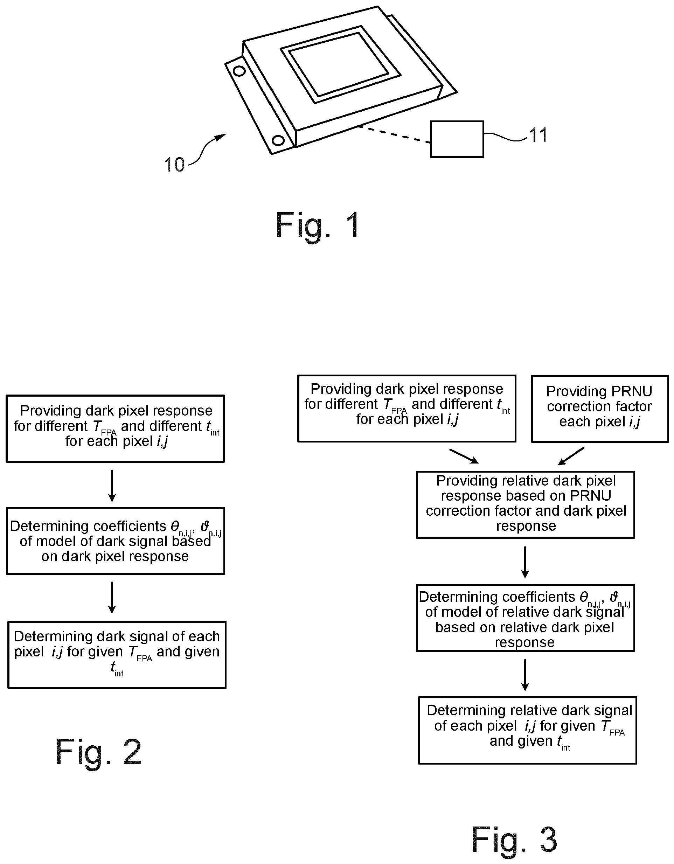

Figure 1 shows a schematic view of an image sensor 10, according to a preferred embodiment of the invention. The image sensor 10 is an InGaAs sensor for short-wave infrared. The image sensor 10 comprises a controller 11 and is configured to perform a method for determining a dark signal for each pixel of the image sensor 10. The steps of the method for determining a dark signal are shown in the flow diagram in figure 2. Furthermore, the image sensor 10 is configured to perform a method for determining a relative dark signal for each pixel of the image sensor 10. The steps of the method for determining a relative dark signal are shown in the flow diagram in figure 3.

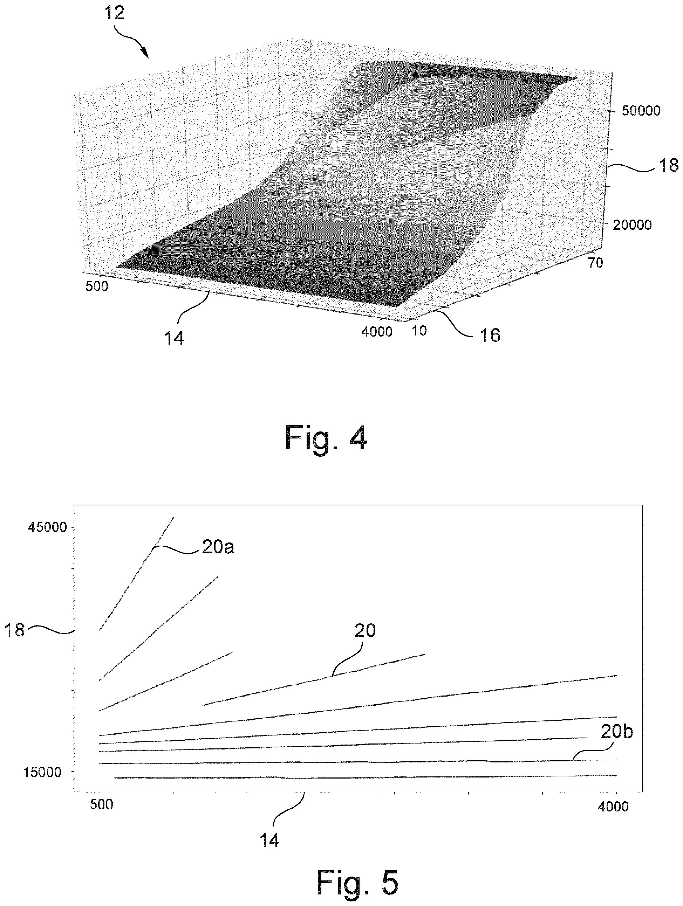

Both methods comprise the step of providing a dark pixel response 18 for different image sensor temperatures 16 and for different integration times 14 for each pixel of the image sensor 10. Figure 4 shows a dark pixel response 18 of one pixel of the image sensor 10 of figure 1. The z-axis of the diagram denotes the dark pixel response 18 in ADU, the x-axis denotes the image sensor temperature 16 in °C and the y-axis denotes the integration time 14 in $\mu$s. In this preferred embodiment, the dark pixel response 18 is provided as follows:

The image sensor 10 is placed in a climate chamber. For nine distinct temperatures of the climate chamber, namely: $T_{CC} \in [0, 7.5, 15, 22.5, 30, 37.5, 45, 52.5, 60]$ °C images are captured with the image sensor 10. For each Tcc, a measurement set consisting of 100 frames is taken for thirty-six different integration times 14 equidistantly distributed

between $t_{int}$ = 500 $\mu$s and $t_{int}$ =4000 $\mu$s. A backbias voltage is set to 500 mV.

For each measurement set, an average value is calculated for each pixel, together with the standard deviation. Thus, for each pixel, there is a surface 12 illustrating the average dark pixel response 18 as a function of image sensor temperature 16 and integration time 14 as shown in figure 4.

Figure 5 shows a curve progression of the dark pixel response 18 of figure 4 along integration time 14 for different image sensor temperatures 16. In other words, the nine lines 20 in figure 5 correspond to 9 sectional cuts parallel to the y-axis of figure 4. The line 20a corresponds to the cut in figure 4 at image sensor temperature 16 corresponding to the climate chamber temperature 60 °C, while line 20b corresponds to the cut in figure 4 at image sensor temperature 16 corresponding to the climate chamber temperature 7.5 °C. Each line 20 has a different gain 22, and a different offset 24.

In a next step of the method for determining the dark signal (see figure 2), coefficients $\theta_{i,j}$, $\vartheta_{i,j}$ of a model for the dark signal for each pixel based on the provided dark pixel response 18 are determined. In this preferred embodiment the model has the following form

$$D_{i,j}(T_{FPA}, t_{int}) = m_{i,j}(T_{FPA}) \cdot t_{int} + b_{i,j}(T_{FPA})$$

$$m_{i,j}(T_{FPA}) = 2^{\theta_0 + \theta_1 \cdot T_{FPA} + \cdots + \theta_n \cdot T_{FPA}^n}$$

$$b_{i,j}(T_{FPA}) = \vartheta_0 + \vartheta_1 \cdot T_{FPA} + \cdots + \vartheta_n \cdot T_{FPA}^n$$

and the procedure is as follows:

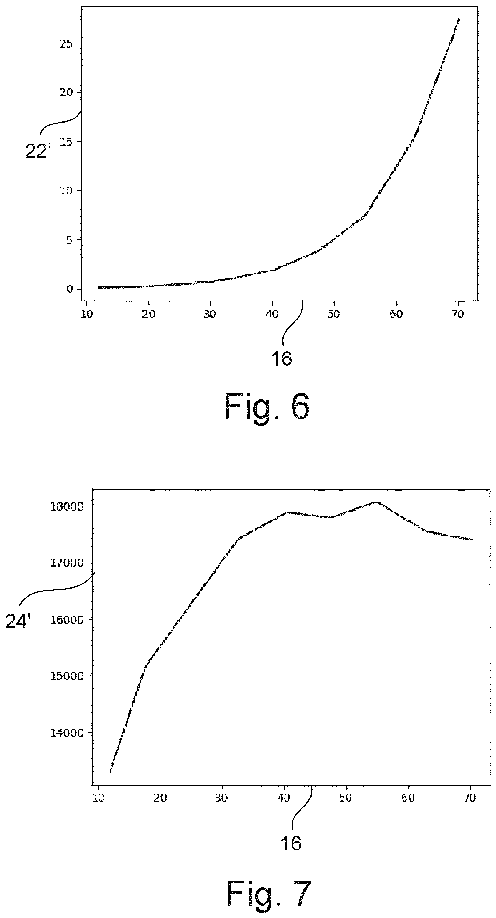

First a straight line is fitted to the dark pixel response 18 in order to determine the estimated gain 22' and estimated offset 24' of each line 20 shown in figure 5. Figure 6 and figure 7 show the result of this process, i.e. the estimated gain 22' and estimated offset 24' of the straight line modeling the dependency of the dark pixel response 18 on integration time 14 as a function of image sensor temperature 16.

Thus, estimated gain 22' $\widehat{m}_{i,j} \in \mathbb{R}^{Nx1}$ and estimated offset 24' $\widehat{b}_{i,j} \in \mathbb{R}^{Nx1}$ are determined for each "fixed" image sensor temperature 16 for each pixel by fitting the straight line to the dark pixel response 18 measured.

In a further step a function of image sensor temperature $16 \in \mathbb{R}^{N \times 1}$ is fitted to the estimated gain 22' $\hat{m}_{i,j}$ by estimating the first set of coefficients $\hat{\theta}_{i,j} \in \mathbb{R}^{(n+1)x1}$ as follows:

$$\hat{\theta}_{i,j} = \left( (W_{i,j}X)^T (W_{i,j}X) \right)^{-1} (W_{i,j}X)^T W_{i,j} log_2(\widehat{m}_{i,j})$$

where $X \in \mathbb{R}^{Nx(n+1)}$ denotes the design matrix containing data on the independent variable of the image sensor temperature 16. The matrix $W_{i,j} \in \mathbb{R}^{NxN}$ is a diagonal weighting matrix for the pixel at location (*i,j*) with elements on the diagonal formed as:

$$W_{i,j}(k,k) = \frac{\sqrt{\widehat{m}_{i,j}(k)}}{\sigma_{i,j}(k)}$$

with $\sigma_{i,j}(k)$ the standard deviation of the corresponding measurement set.

In a further step a function of image sensor temperature 16 $T_{FPA} \in \mathbb{R}^{Nx1}$ is fitted to the estimated offset 18' $\hat{b}_{i,j}$ by determining the second set of estimated coefficients $\hat{\varphi}_{i,j} \in \mathbb{R}^{(n+1)x1}$ as follows:

$$\hat{\vartheta}_{i,j} = (X^T X)^{-1} X^T \hat{b}_{i,j}$$

In this way, the estimated coefficients $\hat{\theta}_{i,j}$, $\hat{\vartheta}_{i,j}$ of the model are determined for all pixels of the image sensor 10.

In the next step of the method for determining the dark signal (see figure 2), the dark signal of each pixel is determined. Based on the coefficients $\hat{\theta}_{i,j}$, $\hat{\vartheta}_{i,j}$ estimated in the previous step the output of the dark current model, i.e. the estimated dark signal 18' $\hat{D}_{i,j}$ as a function of integration time 14 and images sensor temperature 16 is computed according to:

$$\widehat{D}_{i,j}(T_{FPA}, t_{int}) = m_{i,j}(\hat{\theta}_{i,j}, T_{FPA})t_{int} + b_{i,j}(\hat{\vartheta}_{i,j}, T_{FPA})$$

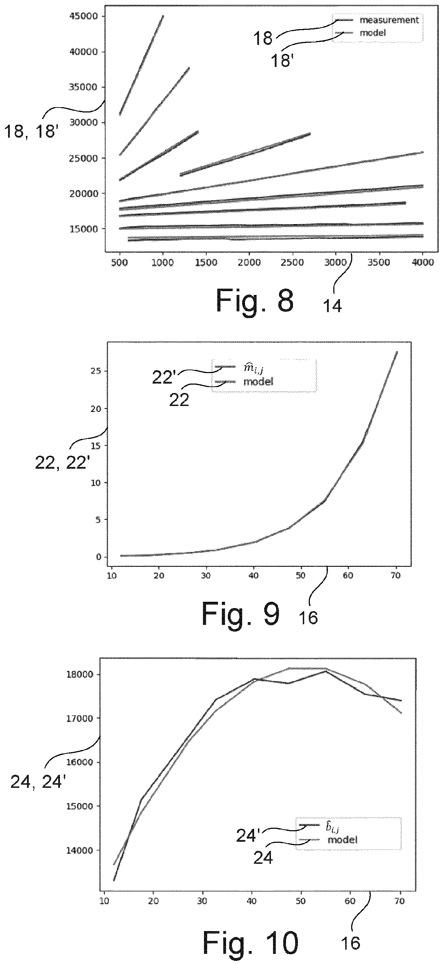

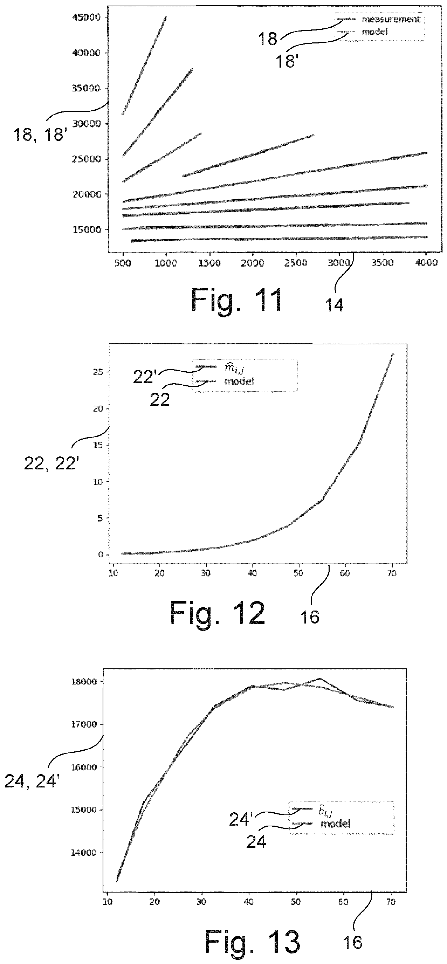

Figures 8 to 13 illustrate the comparison of the value determined by the method for determining the dark signal for each pixel of the image sensor 10 and the curve progression of figure 5, the estimated gain 22' of figure 6 and the estimated offset 24' of figure 7. Figures 8 to 10 are the result of the model having a model order n = 2, while figures 11 to 13 are the result of the model having a model order n= 3.

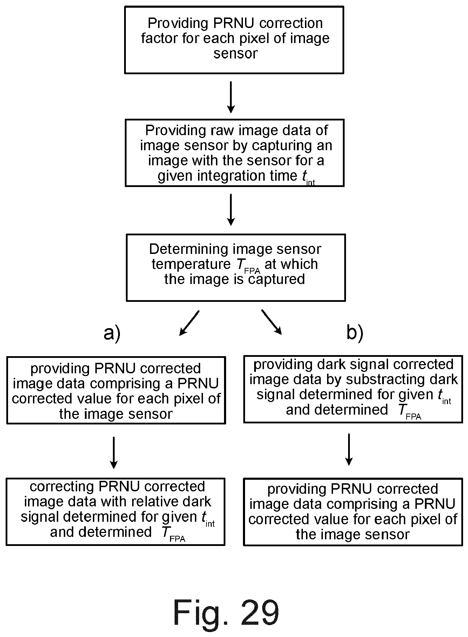

The dark signal 18' determined according to the method for determining the dark signal, can be used for correcting raw image data of the image sensor 10 for dark signal non-uniformity. The steps of the method for correcting raw image data of the image sensor 10 are shown in figure 29 b).

The corrected image 34 is computed by computing the corrected pixel response $C_{i,j}$ for every pixel of the image sensor 10:

$$C_{i,j}(T_{FPA}, t_{int}) = \alpha_{ij}\left(R_{i,j}(T_{FPA}, t_{int}) - \widehat{D}_{i,j}(T_{FPA}, t_{int})\right) + \varepsilon\left(\alpha_{ij}\widehat{D}_{i,j}(T_{FPA}, t_{int})\right)$$

wherein $R_{i,j}$ denotes the raw pixel response, $\alpha_{ij}$ denotes the PRNU correction factor, and $\hat{D}_{i,j}$ denotes the estimated dark signal - all expressions given for a pixel at array position $i,j$ - and $\varepsilon$ ($\alpha_{ij}\hat{D}_{i,j}(T_{FPA}, t_{int})$) denotes the average over all pixels of the estimated dark signal.

In this preferred embodiment, the PRNU correction factors are determined as follows: The image sensor 10 is placed in front of a uniform light source, at the room temperature. A measurement consisting of 100 frames is taken for one selected integration time, in particular, $t_{int}$ = 2501.92 $\mu$s.

Furthermore, dark images are capture. For this purpose, the image sensor is protected from light by putting a cover in front of its focal plane array. Furthermore, the protected image sensor 10 is placed in a climate chamber at a constant temperature. To get the measurements that will be used to calculate PRNU correction factors - in combination with the measurements taken under light - the temperature of the climate chamber is set to the temperature that yields the image sensor temperature 16 measured when taking light images, in particular, $T_{FPA}$=47.25 °C. Analogously is the integration time set to 2501.92 $\mu$s.

The light and dark images are first averaged out. The average dark image is then subtracted from the average light image, which yields the so-called "difference image". Let $\Delta_{i,j}$ denote the pixel of the difference image at location $(i,j)$; the PRNU correction factors $\alpha_{ij}$ are calculated as follows:

$$\alpha_{ij} = \frac{\overline{\Delta}}{\Delta_{i,j}}$$

with $\overline{\Delta}$ being an average over all the pixels in the difference image.

As already mentioned, the image sensor 10 and/or the controller 11 are also configured to perform the method for determining the relative dark signal (see figure 3). The steps for the method for determining the relative dark signal are as follows: After having provided the dark pixel response 18 and the PRNU correction factor, the relative dark pixel response 26 $S_{i,j}(T_{FPA}, t_{int})$ is determined according to

$$S_{i,j}(T_{FPA}, t_{int}) = \alpha_{ij}D_{i,j}(T_{FPA}, t_{int}) - \varepsilon\left(\alpha_{ij}D_{i,j}(T_{FPA}, t_{int})\right)$$

wherein $\alpha_{ij}$ denotes the PRNU correction factor of pixel $i,j$, $D_{i,j}(T_{FPA}, t_{int})$ denotes the dark pixel response 18 of pixel $i,j$, and $\varepsilon$ ($\alpha_{ij}D_{i,j}(T_{FPA}, t_{int})$) denotes the average PRNU corrected dark pixel response. Thus, the method for determining the relative dark signal focuses on a pixel's deviation from the expected dark pixel response and includes the PRNU correction factor of each pixel.

In a next step, the coefficients of the relative dark signal model are determined. In this preferred embodiment the model has the following form

$$S_{i,j}(T_{FPA}, t_{int}) = n_{i,j}(T_{FPA}) \cdot t_{int} + f_{i,j}(T_{FPA})$$

$$n_{i,j}(T_{FPA}) = \varphi_0 + \varphi_1 \cdot T_{FPA} + \cdots + \varphi_n \cdot T_{FPA}^n$$

$$f_{i,j}(T_{FPA}) = \phi_0 + \phi_1 \cdot T_{FPA} + \cdots + \phi_n \cdot T_{FPA}^n$$

and the procedure is as follows:

Estimated gain 28' $\hat{n}_{i,j} \in \mathbb{R}^{Nx1}$ and estimated offset 30' $\hat{f}_{i,j} \in \mathbb{R}^{Nx1}$ are estimated for each "fixed" image sensor temperature 16 for each pixel.

Next, a function of image sensor temperature 16 $T_{FPA} \in \mathbb{R}^{Nx1}$ is fitted to the estimated gain 28' $\hat{n}_{i,j}$ by determining the first set of estimated coefficients $\hat{\varphi}_{i,j} \in \mathbb{R}^{(n+1)x1}$, with $n$ being the model order, as follows:

$$\hat{\varphi}_{i,j} = (X^T X)^{-1} X^T \hat{n}_{i,j}$$

where $X \in \mathbb{R}^{Nx(n+1)}$ denotes a design matrix containing data on the independent variable of images senor temperature 16.

Accordingly, a function of image sensor temperature 16 $T_{FPA} \in \mathbb{R}^{Nx1}$ is fitted to the estimated offset 30' $\hat{f}_{i,j}$ by determining the second set of estimated coefficients $\hat{\phi}_{i,j} \in \mathbb{R}^{(n+1)x1}$, with n being the model order, as follows:

$$\hat{\varphi}_{i,j} = (X^T X)^{-1} X^T \hat{n}_{i,j}$$

In this way, the estimated coefficients $\hat{\varphi}_{i,j}$, $\hat{\phi}_{i,j}$ of the model are determined for all pixels of the image sensor 10.
In the next step of the method for determining the relative dark signal (see figure 3), the relative dark signal of each pixel is determined. Based on the estimated coefficients $\hat{\varphi}_{i,j}$, $\hat{\phi}_{i,j}$ determined in the previous step the output of the relative dark signal model, i.e. the estimated relative dark signal 26' $\hat{S}_{i,j}$ as function of integration time 14 and images sensor temperature 16 is computed according to:

$$\hat{S}_{i,j}(T_{FPA}, t_{int}) = n_{i,j}(\hat{\varphi}_{i,j}, T_{FPA})t_{int} + f_{i,j}(\hat{\phi}_{i,j}, T_{FPA})$$

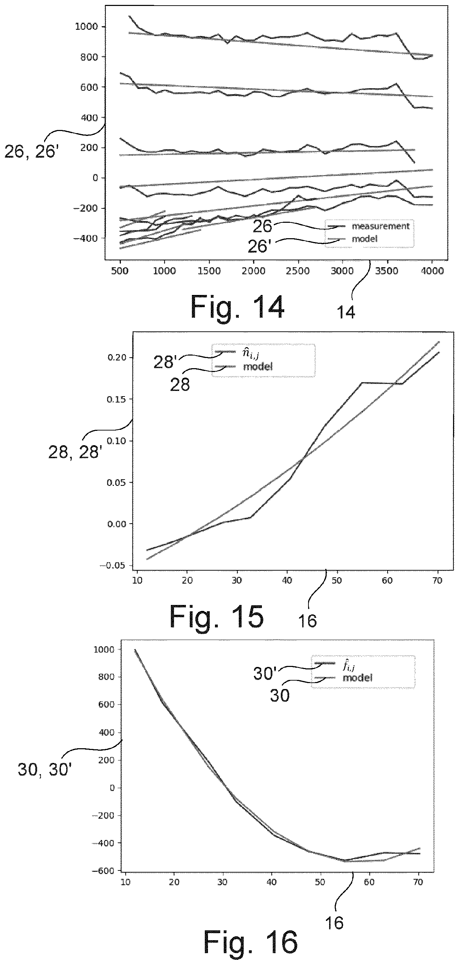

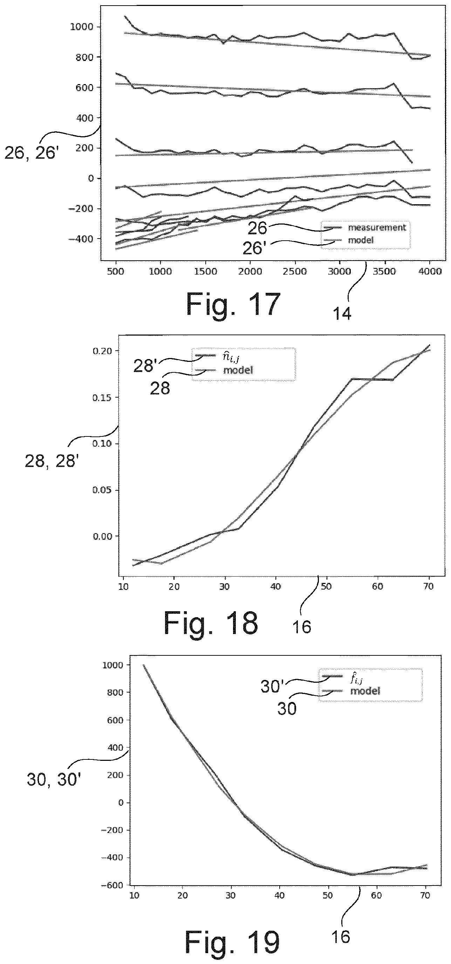

Figures 14 to 19 illustrate the comparison of the value determined by the method for determining the relative dark signal 26' for each pixel of the image sensor 10 and the curve progression of the relative dark pixel response 26, the estimated gain 28' and the estimated offset 30'. Figures 14 to 16 are the result of the model having a model order n = 2, while figures 17 to 19 are the result of the model having a model order n= 3.
The relative dark signal determined according to the method for determining the relative dark signal, can be used for correcting raw image data of the image sensor 10 for dark signal non-uniformity. The steps of the method for correcting raw image data of the image sensor 10 are shown in figure 29 a).
The corrected image 34 is computed by computing the corrected pixel response $C_{i,j}$ for every pixel of the image sensor:

$$C_{i,j}(T_{FPA}, t_{int}) = \alpha_{ij}R_{i,j}(T_{FPA}, t_{int}) - \hat{S}_{i,j}(T_{FPA}, t_{int})$$

wherein $R_{i,j}$ denotes the raw pixel response, $\alpha_{ij}$ denotes the PRNU correction factor, and $\hat{S}_{i,j}$ denotes the relative dark signal 26' - all expressions given for a pixel at array position $i,j$.

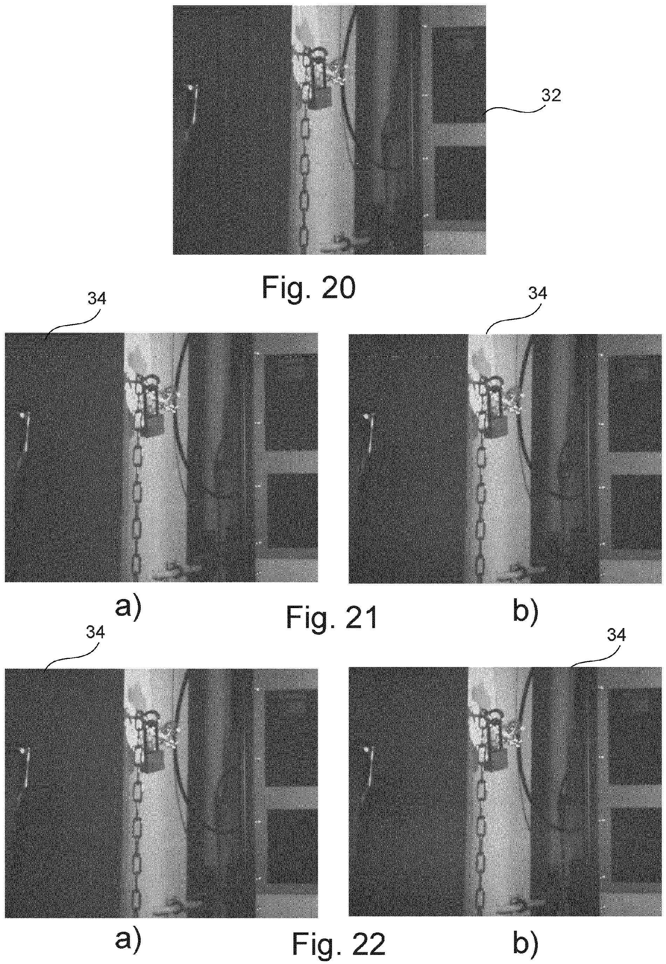

Figures 20 to 28 show raw images 32 and corrected images 34 of the image sensor 10 of figure 1. The figures 20, 23 and 26 each show the raw image 32.

The raw image 32 of figure 20 is captured with an integration time 14 of $t_{int}$ = 2302 $\mu$s, at a climate chamber temperature of $T_{CC}$ = 0°, corresponding to an image sensor temperature 16 of $T_{FPA}$ = 9.25 °C. Figure 21a) shows the corrected image 34 using the method for determining the relative dark signal (figure 3, figure 29a) with a model order of n = 2. Figure 22 a) shows the corrected image 34 using the method for determining the relative dark signal (figure 3, figure 29a) with a model order of n = 3. Figure 21 b) shows the corrected image 34 using the method for determining the dark signal (figure 2, and figure 29b) with a model order of n = 2. Figure 22 b) shows the corrected image 34 using the method for determining the dark signal (figure 2, figure 29b) with a model order of n = 3.

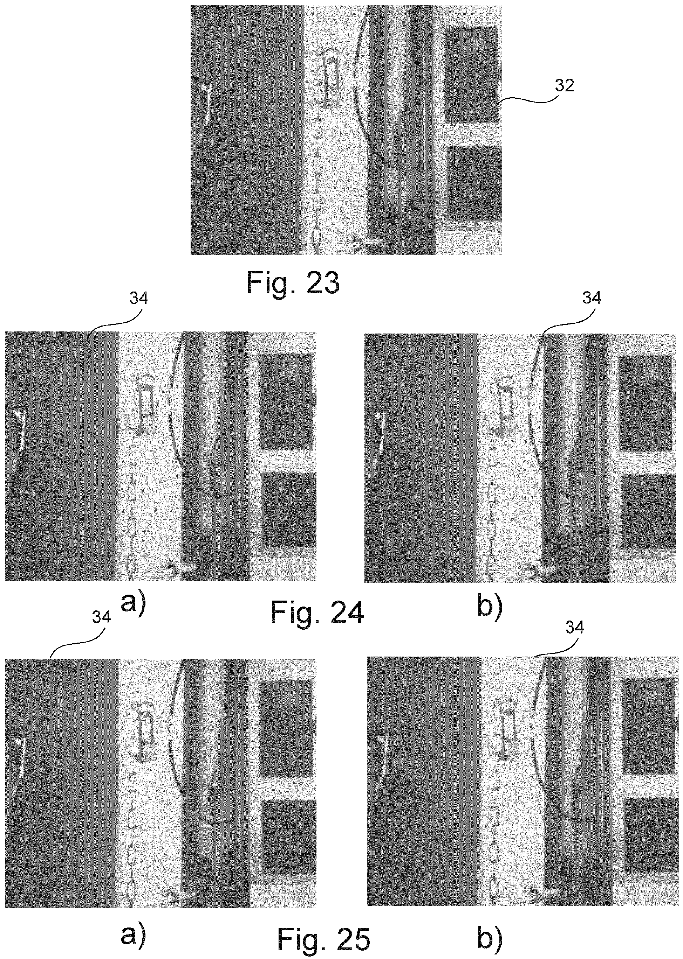

The raw image 32 of figure 23 is captured with an integration time 14 of $t_{int}$ = 4000 $\mu$s, at a climate chamber temperature of Tec = 30°, corresponding to an image sensor temperature 16 of $T_{FPA}$ = 38 °C. Figure 24 a) shows the corrected image 34 using the method for determining the dark signal (figure 3, figure 29a) with a model order of n = 2. Figure 25 a) shows the corrected image 34 using the method for determining the dark signal (figure 3, figure 29a) with a model order of n = 3. Figure 24 b) shows the corrected image 34 using the method for determining the dark signal (figure 2, and figure 29b) with a model order of n = 2. Figure 25 b) shows the corrected image 34 using the method for determining the dark signal (figure 2, figure 29b) with a model order of n = 3.

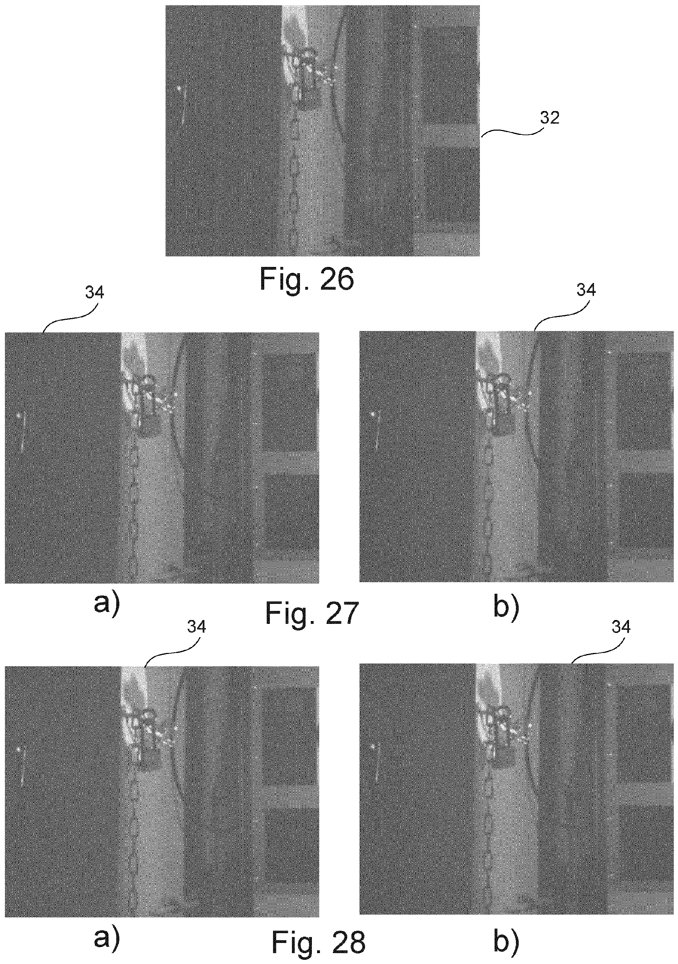

The raw image 32 of figure 26 is captured with an integration time 14 of $t_{int}$ = 804 $\mu$s, at a climate chamber temperature of Tec = 60°, corresponding to an image sensor temperature 16 of $T_{FPA}$ = 63 °C. Figure 27 a) shows the corrected image 34 using the method for determining the dark signal (figure 3, figure 29a) with a model order of n = 2. Figure 28 a) shows the corrected image 34 using the method for determining the dark signal (figure 3, figure 29a) with a model order of n = 3. Figure 27 b) shows the corrected image 34 using the method for determining the dark signal (figure 2, figure 29b) with a model order of n = 2. Figure 28 b) shows the corrected image 34 using the method for determining the dark signal (figure 2, figure 29b) with a model order of n = 3.

## Reference signs

10     image sensor
11     controller
12     surface
14     integration time, $t_{int}$
16     image sensor temperature, $T_{FPA}$
18     dark pixel response, $D_{i,j}$
18'     estimated dark pixel response, $\hat{D}_{i,j}$
20     line
22     gain of the dark pixel response, $m_{i,j}$
22'     estimated gain of the dark pixel response, $\hat{m}_{i,j}$
23     first set of coefficients of the dark pixel response model, $\theta_{i,j}$
23'     estimated first set of coefficients of the dark pixel response model, $\hat{\theta}_{i,j}$
24     offset of the dark pixel response, $b_{i,j}$
24'     estimated offset of the dark pixel response, $\hat{b}_{i,j}$
25     second set of coefficients of the dark pixel response model, $\vartheta_{i,j}$
25'     estimated second set of coefficients of the dark pixel response model, $\vartheta_{i,j}$
26     relative dark pixel response, $S_{i,j}$
26'     estimated relative dark pixel response, $\hat{S}_{i,j}$
28     gain of the relative dark pixel response, $n_{i,j}$
28'     estimated gain of the relative dark pixel response, $\hat{n}_{i,j}$
29     first set of coefficients of the relative dark pixel response model, $\varphi_{i,j}$
29'     estimated first set of coefficients of the relative dark pixel response model, $\hat{\varphi}_{i,j}$
30     offset of the relative dark pixel response, $\hat{t}_{i,j}$
30'     estimated offset of the relative dark pixel response, $\hat{t}_{i,j}$
31     second set of coefficients of the relative dark pixel response model, $\phi_{i,j}$
31'     estimated second set of coefficients of the relative dark pixel response model, $\hat{\phi}_{i,j}$
32     raw image
33     raw pixel response, $R_{i,j}$
34     corrected image
35     corrected pixel response, $C_{i,j}$

**Claims**

1. Method for determining a relative dark signal for each pixel of an image sensor (10), wherein the image sensor (10) comprises multiple pixels, comprising the steps of

   - providing a PRNU correction factor for each pixel of the image sensor (10), comprising the steps of

      ◦ providing one or more light images by capturing one or more images of a uniform light source with the image sensor (10),
      ◦ providing one or more dark images by capturing one or more images in the dark with the image sensor (10), or by capturing one or more images of a uniform light source at a different light level than the light images,
      ◦ determining a difference image from the one or more light images and the one or more dark images, and
      ◦ determining the PRNU correction factor for each pixel of the image sensor (10) from the difference image,

   - providing a dark pixel response (18) for different image sensor temperatures (16) and for different integration times (14) for each pixel of the image sensor (10),
   - providing a relative dark pixel response (26) for each pixel based on the PRNU correction factor of each pixel and the dark pixel response (18) of each pixel, comprising the steps of

      ◦ providing a PRNU corrected dark pixel response by considering the PRNU correction factor of each pixel for the corresponding pixel of the dark pixel response (18), and
      ◦ providing the relative dark pixel response (26) for each pixel by correcting the PRNU corrected dark pixel response with an average PRNU corrected dark pixel response, wherein the average PRNU corrected dark pixel response is an average over all pixels of the PRNU corrected dark pixel response,

   - determining coefficients of a model for the relative dark signal for each pixel based on the provided relative dark pixel response (26),
   - determining the relative dark signal for each pixel for a given integration time (14) and a given image sensor temperature (16) based on the model of the relative dark signal,
   wherein the relative dark signal of the model is dependent on integration time (14) and on image sensor temperature (16),
   wherein the relative dark signal of the model has a linear dependency on integration time (14),
   and wherein a gain (28) and an offset (30) of the linear dependency are dependent on the image sensor temperature (16),
   wherein the coefficients of the model for the relative dark signal comprise a first set of coefficients and a second set of coefficients and wherein the step of determining the coefficients of the model for the relative dark signal for each pixel based on the provided relative dark pixel response comprises

      - determining the gain (28) and offset (30) of the linear dependency by fitting a straight line to the relative dark pixel response (26) as function of integration time (14) for each image sensor temperature (16) of the relative dark pixel response (26),
      - determining the first set of coefficients by fitting a function of image sensor temperature (16) to the determined gains (28), and
      - determining the second set of coefficients by fitting a function of image sensor temperature (16) to the determined offsets (30).

2. Method according to the previous claim, wherein the gain (28) of the linear dependency has a polynomial dependency on image sensor temperature (16) and the offset (30) of the linear dependency has a polynomial dependency on image sensor temperature (16).

3. Method according to the previous claim, wherein an order of the polynomial dependency of the gain (28) and/or offset (30) on image sensor temperature (16) is n = 1 or 2.

4. Method for correcting raw image data (32) of an image sensor (10) for dark signal non-uniformity, wherein the image sensor (10) comprises multiple pixels, comprising the steps:

   - providing a PRNU correction factor for each pixel of the image sensor (10),
   - providing raw image data (32) of the image sensor (10) by capturing an image with the sensor (10) for a given integration time (14), wherein the raw image data (32) comprises a raw value for each pixel of the image sensor (10),
- determine the image sensor temperature (16) at which the image is captured, and
- a) correcting the raw image data (32) by

- providing PRNU corrected image data comprising a PRNU corrected value for each pixel of the image sensor (10) by considering the PRNU correction factor of each pixel for the corresponding raw value,
- correcting the PRNU corrected image data by subtracting the relative dark signal of each pixel from the corresponding PRNU corrected value, wherein the relative dark signal is determined according to any of claims 1 to 3 for the given integration time (14) and the determined image sensor temperature (16),

5. Image sensor (10) comprising a controller (11), wherein the controller (11) is configured to perform the method for determining a relative dark signal according to any of claims 1 to 3, and/or the method for correcting raw image data (32) of the image sensor (10) for dark signal non-uniformity according to claim 4.

6. Image sensor (10) according to the previous claim, wherein the image sensor (10) is a short-wave infrared sensor for a short-wave infrared camera and/or an InGaAs sensor.


**Patentansprüche**

1. Verfahren zum Bestimmen eines relativen Dunkelheitssignals für jedes Pixel eines Bildsensors (10), wobei der Bildsensor (10) mehrere Pixel umfasst, umfassend die Schritte

- Bereitstellen eines PRNU-Korrekturfaktors für jedes Pixel des Bildsensors (10), umfassend die Schritte

o Bereitstellen eines oder mehrerer heller Bilder, indem ein oder mehrere Bilder einer einheitlichen Lichtquelle mit dem Bildsensor (10) aufgenommen werden,
o Bereitstellen eines oder mehrerer dunkler Bilder, indem ein oder mehrere Bilder in der Dunkelheit mit dem Bildsensor (10) aufgenommen werden, oder indem ein oder mehrere Bilder einer einheitlichen Lichtquelle mit einem anderen Lichtpegel als die hellen Bilder aufgenommen werden,
o Bestimmen eines Differenzbilds aus dem einen oder mehreren hellen Bildern und dem einen oder mehreren dunklen Bildern und
◦ Bestimmen des PRNU-Korrekturfaktors für jedes Pixel des Bildsensors (10) aus dem Differenzbild,

- Bereitstellen einer Dunkelheitspixelreaktion (18) für unterschiedliche Bildsensortemperaturen (16) und für unterschiedliche Integrationszeiten (14) für jedes Pixel des Bildsensors (10),
- Bereitstellen einer relativen Dunkelheitspixelreaktion (26) für jedes Pixel basierend auf dem PRNU-Korrekturfaktor jedes Pixels und der Dunkelheitspixelreaktion (18) jedes Pixels, umfassend die Schritte

o Bereitstellen einer korrigierten PRNU-Dunkelheitspixelreaktion, indem der PRNU-Korrekturfaktor jedes Pixels für das entsprechende Pixel der Dunkelheitspixelreaktion (18) berücksichtigt wird, und
o Bereitstellen der relativen Dunkelheitspixelreaktion (26) für jedes Pixel, indem die korrigierte PRNU-Dunkelheitspixelreaktion um eine durchschnittliche korrigierte PRNU-Dunkelheitspixelreaktion korrigiert wird, wobei die durchschnittliche korrigierte PRNU-Dunkelheitspixelreaktion ein Durchschnitt über alle Pixel der korrigierten PRNU-Dunkelheitspixelreaktion ist,

- Bestimmen von Koeffizienten eines Modells für das relative Dunkelheitssignal für jedes Pixel basierend auf der bereitgestellten relativen Dunkelheitspixelreaktion (26),
- Bestimmen des relativen Dunkelheitssignals für jedes Pixel für eine gegebene Integrationszeit (14) und eine gegebene Bildsensortemperatur (16) basierend auf dem Modell des relativen Dunkelheitssignals,

wobei das relative Dunkelheitssignal des Modells von Integrationszeit (14) und von Bildsensortemperatur (16) abhängt,
wobei das relative Dunkelheitssignal des Modells eine lineare Abhängigkeit von Integrationszeit (14) aufweist,
und wobei eine Verstärkung (28) und ein Versatz (30) der linearen Abhängigkeit von der Bildsensortemperatur (16) abhängen,

wobei die Koeffizienten des Modells für das relative Dunkelheitssignal einen ersten Satz von Koeffizienten und einen zweiten Satz von Koeffizienten umfassen und wobei der Schritt zum Bestimmen der Koeffizienten des Modells für das relative Dunkelheitssignal für jedes Pixel, basierend auf der bereitgestellten relativen Dunkelheitspixelreaktion, Folgendes umfasst

- Bestimmen der Verstärkung (28) und des Versatzes (30) der linearen Abhängigkeit, indem eine gerade Linie an die relative Dunkelheitspixelreaktion (26) als Funktion von Integrationszeit (14) für jede Bildsensortemperatur (16) der relativen Dunkelheitspixelreaktion (26) angepasst wird,
- Bestimmen des ersten Satzes von Koeffizienten, indem eine Funktion von Bildsensortemperatur (16) an die bestimmten Verstärkungen (28) angepasst wird, und
- Bestimmen des zweiten Satzes von Koeffizienten, indem eine Funktion von Bildsensortemperatur (16) an die bestimmten Versätze (30) angepasst wird.

2. Verfahren nach dem vorstehenden Anspruch, wobei die Verstärkung (28) der linearen Abhängigkeit eine polynomiale Abhängigkeit von Bildsensortemperatur (16) aufweist und der Versatz (30) der linearen Abhängigkeit eine polynomiale Abhängigkeit von Bildsensortemperatur (16) aufweist.

3. Verfahren nach dem vorstehenden Anspruch, wobei eine Ordnung der polynomialen Abhängigkeit der Verstärkung (28) und/oder des Versatzes (30) von Bildsensortemperatur (16) n = 1 oder 2 ist.

4. Verfahren zum Korrigieren roher Bilddaten (32) eines Bildsensors (10) für Dunkelheitssignalungleichmäßigkeit, wobei der Bildsensor (10) mehrere Pixel umfasst, umfassend die Schritte:

- Bereitstellen eines PRNU-Korrekturfaktors für jedes Pixel des Bildsensors (10),
- Bereitstellen roher Bilddaten (32) des Bildsensors (10), in dem ein Bild mit dem Sensor (10) für eine gegebene Integrationszeit (14) aufgenommen wird, wobei die rohen Bilddaten (32) einen rohen Wert für jedes Pixel des Bildsensors (10) umfassen,
- Bestimmen der Bildsensortemperatur (16), bei der das Bild aufgenommen wird, und
- a) Korrigieren der rohen Bilddaten (32) durch

- Bereitstellen korrigierte PRNU-Bilddaten, die einen korrigierten PRNU-Wert für jedes Pixel des Bildsensors (10) umfassen, indem der PRNU-Korrekturfaktor jedes Pixels für den entsprechenden rohen Wert berücksichtigt wird,
- Korrigieren der korrigierten PRNU-Bilddaten, indem das relative Dunkelheitssignal jedes Pixels von dem entsprechenden korrigierten PRNU-Wert abgezogen wird, wobei das relative Dunkelheitssignal gemäß einem der Ansprüche 1 bis 3 für die gegebene Integrationszeit (14) und die bestimmte Bildsensortemperatur (16) bestimmt wird.

5. Bildsensor (10), der eine Steuereinheit (11) umfasst, wobei die Steuereinheit (11) dazu konfiguriert ist, das Verfahren zum Bestimmen eines relativen Dunkelheitssignals nach einem der Ansprüche 1 bis 3 und/oder das Verfahren zum Korrigieren roher Bilddaten (32) des Bildsensors (10) auf Dunkelheitssignalungleichmäßigkeit nach Anspruch 4 durchzuführen.

6. Bildsensor (10) nach dem vorstehenden Anspruch, wobei der Bildsensor (10) ein Kurzwelleninfrarotsensor für eine Kurzwelleninfrarotkamera und/oder ein InGaAs-Sensor ist.

**Revendications**

1. Procédé de détermination d'un signal d'obscurité relative pour chaque pixel d'un capteur d'image (10), dans lequel le capteur d'image (10) comprend de multiples pixels, comprenant les étapes suivantes :

- fourniture d'un facteur de correction PRNU pour chaque pixel du capteur d'image (10), comprenant les étapes suivantes :

• fourniture d'une ou plusieurs images lumineuses en capturant une ou plusieurs images d'une source de lumière uniforme avec le capteur d'image (10),
• fourniture d'une ou plusieurs images sombres en capturant une ou plusieurs images dans l'obscurité avec le capteur d'image (10), ou en capturant une ou plusieurs images d'une source de lumière uniforme à un niveau de lumière différent de celui des images lumineuses,

• détermination d'une image de différence à partir de l'une ou de plusieurs images lumineuses et de l'une ou de plusieurs images sombres, et

• détermination du facteur de correction PRNU pour chaque pixel du capteur d'image (10) à partir de l'image de différence,

- fourniture d'une réponse de pixel sombre (18) pour différentes températures de capteur d'image (16) et pour différents temps d'intégration (14) pour chaque pixel du capteur d'image (10),
- fourniture d'une réponse de pixel sombre relative (26) pour chaque pixel sur la base du facteur de correction PRNU de chaque pixel et de la réponse de pixel sombre (18) de chaque pixel, comprenant les étapes suivantes :

• fourniture d'une réponse de pixel sombre corrigée PRNU en prenant en compte le facteur de correction PRNU de chaque pixel pour le pixel correspondant de la réponse de pixel sombre (18), et

• fourniture de la réponse de pixel sombre relative (26) pour chaque pixel en corrigeant la réponse de pixel sombre corrigée PRNU avec une réponse moyenne de pixel sombre corrigée PRNU, dans lequel la réponse moyenne de pixel sombre corrigée PRNU est une moyenne sur tous les pixels de la réponse de pixel sombre corrigée PRNU,

- détermination de coefficients d'un modèle pour le signal d'obscurité relative pour chaque pixel sur la base de la réponse relative de pixel sombre (26) fournie,
- détermination du signal d'obscurité relative pour chaque pixel pour un temps d'intégration donné (14) et une température de capteur d'image donnée (16) sur la base du modèle de signal d'obscurité relative, dans lequel le signal d'obscurité relative du modèle dépend du temps d'intégration (14) et de la température de capteur d'image (16),
dans lequel le signal d'obscurité relative du modèle a une dépendance linéaire au temps d'intégration (14), et dans lequel un gain (28) et un décalage (30) de la dépendance linéaire dépendent de la température de capteur d'image (16),
dans lequel les coefficients du modèle pour le signal d'obscurité relative comprennent un premier ensemble de coefficients et un second ensemble de coefficients et dans lequel l'étape de détermination des coefficients du modèle pour le signal d'obscurité relative pour chaque pixel sur la base de la réponse relative de pixel sombre fournie comprend :

- la détermination du gain (28) et du décalage (30) de la dépendance linéaire en ajustant une ligne droite à la réponse relative de pixel sombre (26) comme une fonction du temps d'intégration (14) pour chaque température de capteur d'image (16) de la réponse relative de pixel sombre (26),
- la détermination du premier ensemble de coefficients en ajustant une fonction de la température de capteur d'image (16) aux gains déterminés (28), et
- la détermination du second ensemble de coefficients en ajustant une fonction de la température de capteur d'image (16) aux décalages déterminés (30).

2. Procédé selon la revendication précédente, dans lequel le gain (28) de la dépendance linéaire présente une dépendance polynomiale à la température de capteur d'image (16) et le décalage (30) de la dépendance linéaire présente une dépendance polynomiale à la température de capteur d'image (16).

3. Procédé selon la revendication précédente, dans lequel un ordre de la dépendance polynomiale du gain (28) et/ou du décalage (30) à la température de capteur d'image (16) est n = 1 ou 2.

4. Procédé de correction de données d'image brutes (32) d'un capteur d'image (10) en ce qui concerne la non-uniformité de signal d'obscurité, dans lequel le capteur d'image (10) comprend de multiples pixels, comprenant les étapes suivantes :

- fourniture d'un facteur de correction PRNU pour chaque pixel du capteur d'image (10),
- fourniture de données d'image brutes (32) du capteur d'image (10) en capturant une image avec le capteur (10) pour un temps d'intégration donné (14), dans laquelle les données d'image brutes (32) comprennent une valeur brute pour chaque pixel du capteur d'image (10),
- détermination de la température de capteur d'image (16) à laquelle l'image est capturée, et
- a) correction des données d'image brutes (32) en

- fournissant des données d'image corrigées PRNU comprenant une valeur corrigée PRNU pour chaque pixel du capteur d'image (10) en tenant compte du facteur de correction PRNU de chaque pixel pour la valeur brute correspondante,
- corrigeant les données d'image corrigées PRNU en soustrayant de la valeur corrigée PRNU correspondante le signal d'obscurité relative de chaque pixel, dans lequel le signal d'obscurité relative est déterminé selon l'une quelconque des revendications 1 à 3 pour le temps d'intégration donné (14) et la température de capteur d'image déterminée (16).

5. Capteur d'image (10) comprenant une unité de commande (11), dans lequel l'unité de commande (11) est configurée pour exécuter le procédé de détermination d'un signal d'obscurité relative selon l'une quelconque des revendications 1 à 3, et/ou le procédé de correction de données d'image brutes (32) du capteur d'image (10) en ce qui concerne la non-uniformité du signal d'obscurité selon la revendication 4.

6. Capteur d'image (10) selon la revendication précédente, dans lequel le capteur d'image (10) est un capteur infrarouge à ondes courtes pour une caméra infrarouge à ondes courtes et/ou un capteur InGaAs.

Fig. 1

Fig. 2

Fig. 3

Fig. 4

Fig. 5

22'

16

Fig. 6

24'

16

Fig. 7

Fig. 8

Fig. 9

Fig. 10

Fig. 11

Fig. 12

Fig. 13

Fig. 14

Fig. 15

Fig. 16

26, 26'

26
26'

measurement
model

Fig. 17    14

28, 28'

28'
28

$\hat{n}_{i,j}$
model

Fig. 18    16

30, 30'

30'
30

$\hat{f}_{i,j}$
model

Fig. 19    16

32

Fig. 20

34

34

a)

Fig. 21

b)

34

34

a)

Fig. 22

b)

Fig. 23

a)      Fig. 24      b)

a)      Fig. 25      b)

Fig. 26

a)      Fig. 27      b)

a)      Fig. 28      b)

Providing PRNU correction factor for each pixel of image sensor

↓

Providing raw image data of image sensor by capturing an image with the sensor for a given integration time $t_{int}$

↓

Determining image sensor temperature $T_{FPA}$ at which the image is captured

a) ↙ ↘ b)

providing PRNU corrected image data comprising a PRNU corrected value for each pixel of the image sensor

providing dark signal corrected image data by substracting dark signal determined for given $t_{int}$ and determined $T_{FPA}$

↓

↓

correcting PRNU corrected image data with relative dark signal determined for given $t_{int}$ and determined $T_{FPA}$

providing PRNU corrected image data comprising a PRNU corrected value for each pixel of the image sensor

# Fig. 29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004051797 A1


**Non-patent literature cited in the description**

- Smart onboard image enhancement algorithms for SWIR day and night vision camera. **J. DASA ; K. VANHOOF A ; G. GIELISA ; B, GOUVERNEURA ; K. WOUTERSA ; P.DEROOA ; R. VANDERSMISSENB ; J. VERMEIREN ; P. MERK-ENA.** PROCEEDINGS OF SPIE. IEEE, 26 May 2015, vol. 9451